(19) **Europäisches Patentamt**
**European Patent Office**
**Office européen des brevets**

(11) **EP 4 757 236 A1**

(12) **EUROPEAN PATENT APPLICATION**

(43) Date of publication:
**10.06.2026 Bulletin 2026/24**

(21) Application number: **24217184.1**

(22) Date of filing: **03.12.2024**

(51) International Patent Classification (IPC):
***H04L 9/08*** *(2006.01)*

(52) Cooperative Patent Classification (CPC):
**H04L 9/083;** H04L 9/0833

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Gurulogic Microsystems Oy
20100 Turku (FI)**

(72) Inventor: **Kärkkäinen, Tuomas
20400 Turku (FI)**

(74) Representative: **Papula Oy
P.O. Box 981
00101 Helsinki (FI)**

(54) **METHODS AND ARRANGEMENTS FOR DISTRIBUTING SHARED SECRETS**

(57) For distributing a shared secret (302) among clients, in response to a first request (101, 202, 402) from a first client, a first ephemeral key (309) and one or more further ephemeral keys (310, 311) are generated (305). The shared secret (302) is digitally encapsulated (103) in a first version (313) and one or more further versions (314, 315). Each version (313, 314, 315) is the shared secret (302) encapsulated with the respective ephemeral key (309) and subject to decapsulation with a respective private key, a paired public key of which is known to belong to the respective client. The first (313) and one or more further versions (314, 315) are stored in association with a common identifier (304). When a second request (106, 407, 503, 702) comes from a client identifiable as a holder of one of the private keys and refers to said common identifier (304), that version (313, 314, 315) is transmitted that is subject to decapsulation with the private key of the identified client.

Fig. 3

## Description

### FIELD OF THE INVENTION

The invention concerns generally the technical field of security needed in using digital services among two or more communicating parties. In particular, the invention concerns the task of distributing a shared secret between two or more clients for later use in communications or other applications where cryptographic methods are utilized.

### BACKGROUND OF THE INVENTION

Many applications of cryptography require two or more parties to have access to a so-called shared secret. A straightforward example is symmetric cryptography, in which a transmitting party uses the shared secret as such as an encryption key and a receiving party uses the same shared secret as a decryption key. Better security against certain attack vectors can be achieved by not using the shared secret as such as a key but making the communicating parties use the shared secret as an input to some further cryptographic operations to derive the actual key or keys. Other examples of using a shared secret include, but are not limited to the use of bots and/or robots, meaning artificial intelligence powered non-human actors that operate under authorization of a party.

The task of distributing a shared secret among parties for cryptographic applications is not a straightforward one, as it involves a kind of vicious circle: one would need a secure method to communicate the shared secret, but the shared secret itself - or access to it by the parties - is the prerequisite of making the communications secure. Challenges in securely distributing a shared secret have led, for example, to introducing the principle of asymmetric cryptography, in which keys appear in pairs: a party can safely publish its public key and ask everyone to use that public key for encrypting transmissions towards its known holder, as the only possible way to decrypt such encrypted transmissions is with the corresponding private key that the party holds strictly to itself. While asymmetric cryptography removes the need to distribute a shared secret, it has its drawbacks. For example, generating and using pairs of public and private keys that are long enough to adequately resist brute force attacks is computationally intensive to a degree that may make it impossible or at least commercially unattractive for use in simpler digital devices like sensor nodes, digitally controlled household appliances, or the like.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide methods and arrangements for distributing shared secrets between parties in a way that only requires reasonable complicatedness and computational capacity but is still secure enough to resist attacks of even the level that will become possible with quantum computers. A further objective is to provide a secure way of using symmetric cryptography on basis of preconditioned exchange of key-related information.

According to a first aspect, there is provided an arrangement for distributing a shared secret among clients. The arrangement is configured to, in response to receiving a first request from a first client, generate a first ephemeral key and one or more further ephemeral keys, and to digitally encapsulate the shared secret in a first version and one or more further versions using a key encapsulation mechanism. Said first version is the shared secret encapsulated with the first ephemeral key and subject to decapsulation with a first private key, a paired public key of which is known to the arrangement as being a public key of the first client. Each said further version is the shared secret encapsulated with a respective one of said one or more further ephemeral keys and subject to decapsulation with a respective further private key, a paired public key of which is known to the arrangement as being a public key of a respective further client. The arrangement is configured to store said first and said one or more further versions in association with a common identifier, and to respond to receiving a second request from one of said first or further clients identifiable as a holder of one of said first or further private keys, said second request referring said common identifier, by transmitting that of said first or further versions that is subject to decapsulation with the private key, the paired public key of which is known to the arrangement as being a public key of said one of said first or further clients.

According to an embodiment, the arrangement is configured to generate said one or more further ephemeral keys in association with respective client identifiers revealed by said first request. This involves at least the advantage that in the continuation, the encapsulated versions will be identifiable and possible to associate with each respective client.

According to an embodiment, the arrangement comprises a hardened true random number generator subsystem configured to generate said shared secret. This involves at least the advantage that highest possible entropy and security of the shared secret can be ensured.

According to an embodiment, the arrangement is configured to transmit said first version to said first client in a response transmission responding to said first request. This involves at least the advantage that the initiator client can be given large freedom concerning how to handle the shared secret in the continuation.

According to an embodiment, the arrangement is configured to use a value received in said first request as said shared secret. This involves at least the advantage that the operation of the arrangement can be adapted to the handling of shared secrets in a very versatile way.

According to an embodiment, the arrangement is configured to generate said common identifier as a cryptoproduct derived from said shared secret. This involves at least the advantage that the generation of additional digital data can be kept at minimum.

According to an embodiment, the arrangement is configured to use said shared secret or a cryptoproduct derived therefrom as an encryption key to encrypt digital data received from the first client, store the encrypted digital data in association with said common identifier, and respond to receiving said second request from said one of said further clients by transmitting the encrypted digital data to said one of said further clients. This involves at least the advantage that the arrangement can be used to securely store, forward, and play back digital data for the needs of clients.

According to a second aspect, there is provided a method for distributing a shared secret among clients. The method comprises, in response to receiving a first request from a first client, generating a first ephemeral key and one or more further ephemeral keys. The method comprises digitally encapsulating the shared secret in a first version and one or more further versions using a key encapsulation mechanism. Said first version is the shared secret encapsulated with the first ephemeral key and subject to decapsulation with a first private key, a paired public key of which is known to the arrangement as being a public key of the first client. Each said further version is the shared secret encapsulated with a respective one of said one or more further ephemeral keys and subject to decapsulation with a respective further private key, a paired public key of which is known to the arrangement as being a public key of a respective further client. The method comprises storing said first and said one or more further versions in association with a common identifier, and responding to receiving a second request from one of said first or further clients identifiable as a holder of one of said first or further private keys, said second request referring said common identifier, by transmitting that of said first or further versions that is subject to decapsulation with the private key, the paired public key of which is known to the arrangement as being a public key of said one of said first or further clients.

According to an embodiment, the generating of said one or more further ephemeral keys takes place in association with respective client identifiers revealed by said first request. This involves at least the advantage that in the continuation, the encapsulated versions will be identifiable and possible to associate with each respective client.

According to an embodiment, the method comprises generating said shared secret in a hardened true random number generator subsystem. This involves at least the advantage that highest possible entropy and security of the shared secret can be ensured.

According to an embodiment, said first version is transmitted to said first client in a response transmission responding to said first request. This involves at least the advantage that the initiator client can be given large freedom concerning how to handle the shared secret in the continuation.

According to an embodiment, a value received in said first request is used as said shared secret. This involves at least the advantage that the operation of the arrangement can be adapted to the handling of shared secrets in a very versatile way.

According to an embobdiment, the method comprised generating said common identifier as a cryptoproduct derived from said shared secret. This involves at least the advantage that the generation of additional digital data can be kept at minimum.

According to an embodiment, the method comprises using said shared secret or a cryptoproduct derived therefrom as an encryption key to encrypt digital data received from the first client, storing the encrypted digital data in association with said common identifier, and responding to receiving said second request from said one of said further clients by transmitting the encrypted digital data to said one of said further clients. This involves at least the advantage that the arrangement can be used to securely store, forward, and play back digital data for the needs of clients.

According to a third aspect, there is provided a computer program product comprising one or more sets of one or more machine-executable instructions that are configured to, when executed by one or more processors, make said one or more processors execute a method of a kind described above.

## BRIEF DESCRIPTION OF THE DRAWINGS

In the drawings:

**Figure 1** illustrates a sequence of events between two clients and a trusted third party,
**Figure 2** illustrates a sequence of events between two clients and a trusted third party,
**Figure 3** illustrates a method executed by an arrangement,
**Figure 4** illustrates a sequence of events between clients and a trusted third party,
**Figure 5** illustrates a sequence of events between clients and a trusted third party,
**Figure 6** illustrates a sequence of events between clients and a trusted third party, and
**Figure 7** illustrates a sequence of events between clients and a trusted third party.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

Concerning terminology, in this description the term cryptoproduct means the output of a cryptographic operation. Examples of cryptoproducts include but are not limited to encryption keys, sets of keys, certificates, and digital signatures. Cryptographic operations (or crypto-operations for short) can in many cases be further characterised as either encrypting operations or decrypting operations.

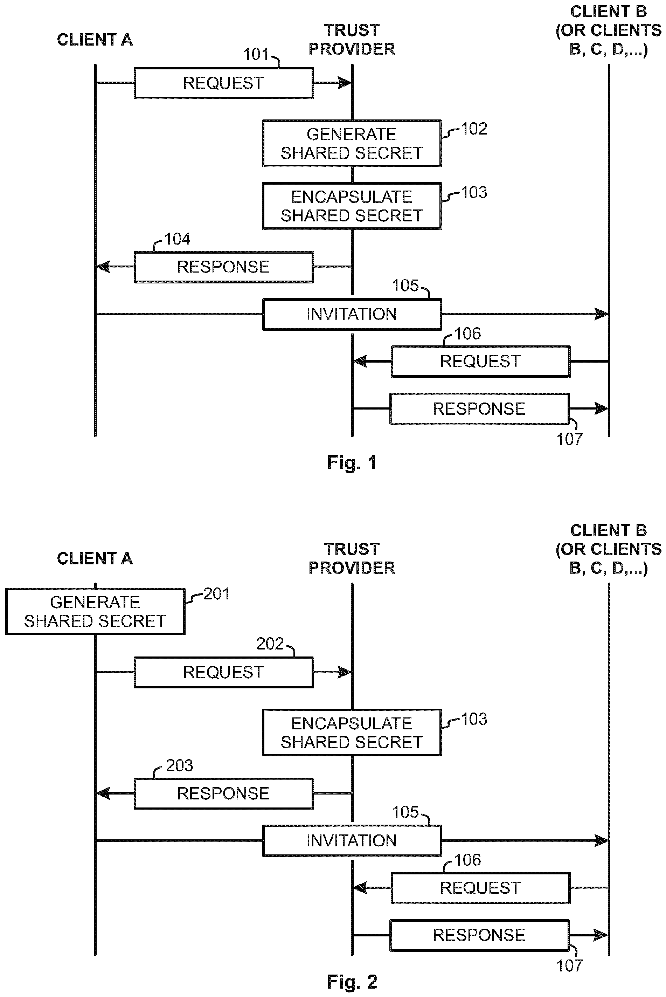

Fig. 1 illustrates the exchange of transmissions and execution of some operations in an arrangement for distributing a shared secret among clients. In fig. 1 it is assumed that there are at least two clients A and B who would benefit from getting hold of a common shared secret. There may be more clients C, D, ... with the same intentions. The parties that are called clients may be human users, in which case the operations described in the following take place in respective user devices operated by their human users. Additionally, or alternatively, at least some of the clients may be independently operating electronic devices, examples of which include but are not limited to node devices of a communications network, sensor devices of a sensor network, and devices operating as a part of a building automation network. As a difference to user devices, independently operating electronic devices operate without direct user interaction, executing one or more computer programs stored therein and/or at their disposal. As a further example, at least some of the clients may be software processes executing in some execution environment that may be centralized or distributed.

Concerning the following description, it is not important what purpose the shared secret is to be used for, but as an illustrative and non-limiting example it could be used as a cryptographic key (or, as a seed for deriving a cryptographic key) for use in further communications protected with symmetric encryption between the clients. While both symmetric and asymmetric encryption involve their respective advantages, symmetric encryption is more preferable for use in devices that only have limited amounts of power and/or computational capacity because it consumes less these resources.

In addition to the clients, fig. 1 illustrates a party called a trust provider. The trust provider is, as the name suggests, a party that can be trusted, for example, to reliably identify clients that communicate with it and to produce random numbers of high entropy. The trust provider is typically a party who maintains and operates a server or an arrangement of linked servers that have been objectively and impartially evaluated and certified for secure operation. A digital certificate issued by the trust provider can be relied upon as a proof of the respective piece of digital information being authentic and having unchallenged integrity.

At the first step shown in fig. 1, the trust provider receives a request 101 from the client marked as client A in fig. 1. The request 101 contains some kind of an indication that client A wants to establish a secret that is to be shared between them and at least one other client B, (C, D...) . The request 101 may also be assumed to contain identifier(s) of the other client(s) with which the secret is to be shared. This is not necessary in all cases, however. One may also imagine cases where a client A asks the trust provider to establish a secret to be shared with other client(s) B, (C, D...) so routinely that already the reception of the request 101 tells the trust provider, which other client(s) should be involved.

In response to receiving the request 101, the trust provider generates a shared secret at step 102. Preferably, the trust provider uses a certified source of true randomness for generating the shared secret at step 102. Examples of suitable sources of true randomness include, but are not limited to, specialized hardware known as hardware random number generators (HRNG), true random number generators (TRNG), non-deterministic random bit generators (NRBG), or physical random number generators. Physical phenomena that may serve as sources of randomness include, but are not limited to, electrical noise, chained free-running oscillators, nuclear decay, shot noise, and quantum optical phenomena.

Step 103 in fig. represents digitally encapsulating the shared secret using a key encapsulation mechanism. Here, it is assumed that an intended recipient possesses a key pair consisting of a private key and the corresponding public key. Usually designated with the acronym KEM, according to a general definition a key encapsulation mechanism allows a sender who knows the public key of the intended recipient to simultaneously generate a short random secret key and an encapsulation or ciphertext of the secret key by the KEM's encapsulation algorithm. The recipient who knows the private key corresponding to the public key can recover the same random secret key from the encapsulation by the KEM's decapsulation algorithm. In the present context, the shared secret generated at step 102 is considered as the "random secret key" in the general definition of a KEM.

In particular, at step 103 the trust provider encapsulates the shared secret in a first version and one or more further versions. The first version is the shared secret encapsulated so that it is subject to decapsulation with a private key held by client A. Each further version is the shared secret encapsulated so that it is subject to decapsulation with a respective private key held by one of the other clients B, (C, D, ...) .

At the next step in fig. 1, the trust provider transmits a response 104 to client A. In this embodiment, the trust provider transmits the first version mentioned above to client A in the response 104. In other words, the response 104 responds to the request 101 that the trust provider received from client A earlier and delivers the shared secret generated at step 102 to client A in an encapsulated form that client A is able to decapsulate with a private key known to client A.

At the next step in fig. 1, client A sends an invitation 105 to the other client B who they wish to get hold of the same shared secret. If there are several such other clients B, C, D,..., client A sends a respective invitation to each one of them. The purpose of the invitation 105 is to make the other client(s) aware that there is a respective encapsulated version of the shared secret waiting for them at the trust provider. Exact ways in which this information is conveyed to the other client(s) are described in more detail later in this text. In general, we may assume that a common identifier exists that identifies all encapsulated versions of the shared secret at the trust provider.

At the next step in fig. 1, client B sends what can be called here a second request 106 to the trust provider. Essentially, with the second request 106 client B asks to get the respective encapsulated version of the shared secret. If other clients C, D,... also received an invitation from client A, they too may send their respective second requests to the trust provider. Every client who sends requests to the trust provider should authenticate themselves to the trust provider and be capable of making reference to the shared secret that is to be distributed. Advantageous ways in which such reference can be made are described in detail later in this text.

At the last step shown in fig. 1, the trust provider responds to the second request 106 with a further response 107, in which the trust provider transmits one of the further versions of the encapsulated shared secret. The trust provider knows who was the client from which it received the second request 106, so the version included in the further response 107 is the one that is subject to decapsulation with the private key held by the originator of the second request 106.

Fig. 2 shows another embodiment of the exchange of transmissions and execution of some operations in an arrangement for distributing a shared secret among clients. The parties shown are the same as in fig. 1. As a difference to the embodiment of fig. 1, in fig. 2 the shared secret is not generated by the trust provider but by the client that was called client A in the description of fig. 1. The step of generating the shared secret is shown with reference designator 201 in fig. 2.

While there occurs the transmission of the so-called first request 202 from client A to the trust provider also in fig. 2, there is the difference that in fig. 2 the indication included in the first request 202 that client A wants to establish a secret (that is to be shared) actually contains the shared secret itself. Step 103 is the same as the similarly designated step in fig. 1 and involves the trust provider digitally encapsulating the shared secret in a first version and one or more further versions, using a key encapsulation mechanism. Similar to fig. 1, the first version is subject to decapsulation with a private key held by client A. Each further version is subject to decapsulation with a respective further private key held by respective one of the other client (s) B, (C, D,...) .

At the next step in fig. 2, the trust provider transmits a response 203 to client A. In this embodiment, the trust provider may transmit the first version mentioned above to client A in the response 203, but this is not obligatory as client A knows the shared secret already (because they generated it themselves at step 201). In any case, the response 203 responds to the request 202 that the trust provider received from client A earlier and may also deliver the shared secret generated at step 201 to client A in an encapsulated form that client A is able to decapsulate with a private key known to client A. At least, the response 203 is a confirmation for client A that the further encapsulated versions of the shared secret are ready at the trust provider, waiting for the other client (s) B, (C, D,...) .

The invitation(s) 105 transmitted by client A, the request(s) 106 transmitted by the other client(s), and the response (s) 107 by the trust provider are the same as in the embodiment of fig. 1 above, as indicated by the same reference designators.

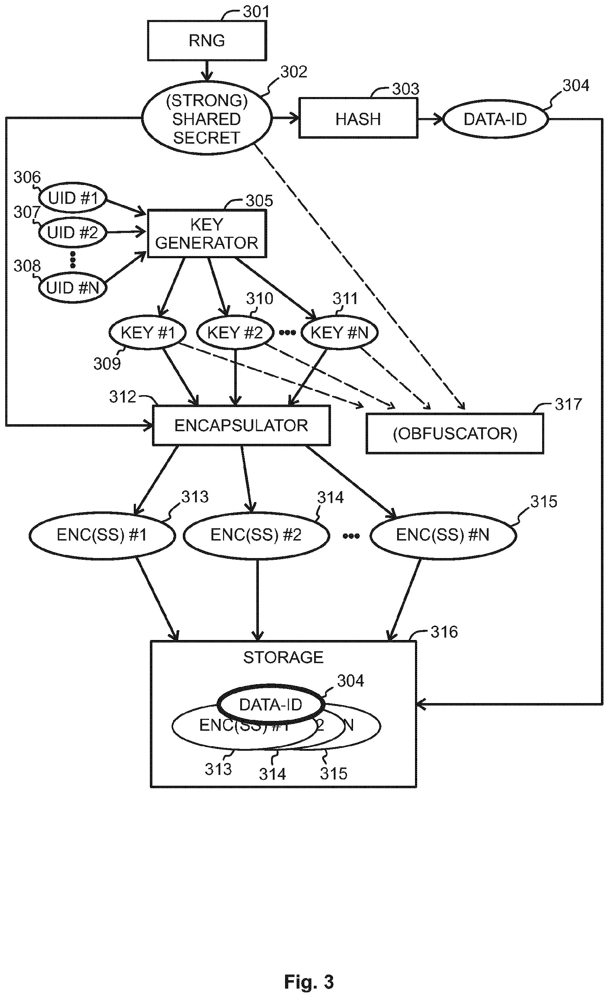

Fig. 3 illustrates some functional units and their operation at an arrangement operated as the trust provider in a sequence of events like those in figs. 1 and 2. The arrangement may comprise a so-called hardened true random generator subsystem 301 that is configured to generate shared secrets of maximal entropy. An advantage of having a hardened true random generator subsystem 301 in (or at least at the disposal of) the trust provider is that the generation of shared secret is not prone to hacking in some way that may be possible if one had to rely upon a random number generator operating in a user device of unknown (or not completely known) origin. If the arrangement is to be used only for operation in accordance with fig. 2, the hardened true random generator subsystem 301 is naturally not needed, at least not for the purpose described here, as the shared secret will then always come from the client initiating the distribution of the shared secret.

A shared secret generated by the hardened true random generator subsystem 301 is shown with reference designator 302 in fig. 3. The shared secret 302 may be called a strong one due to the guaranteed security of and high entropy associated with the hardened true random generator subsystem 301. If operation according to fig. 2 is considered, there is only the difference that the arrangement would receive the shared secret in a request from the initiating client and not generate it by itself.

Block 303 in fig. 3 represents the generation of a common identifier, called the DATA-ID 304, using the shared secret 302 as input data. Generating the DATA-ID 304 in block 303 may involve calculating a hash or otherwise generating a cryptoproduct that has a one-to-one correspondence to the shared secret 302. The method used in block 303 should be cryptographically unidirectional, meaning that from a generated DATA-ID 304 it is impossible to go backwards or find out the shared secret 302. Many widely used hashing methods have this characteristic, for which reason block 303 is marked as a hash in fig. 3.

The arrangement comprises a key generator 305, the purpose of which is to generate the keys to be used in encapsulating the shared secret. As many keys for encapsulating should be generated as there are clients among which the shared secret is to be distributed. Additionally, it is important to generate the keys for encapsulating so that each encapsulated version of the shared secret is subject to decapsulation with a private key held by the client for which that version is meant.

In fig. 3, it is assumed that there are N clients, where N is a positive integer equal to or larger than 2, among which the shared secret is to be distributed. It is further assumed that user identifiers (UID's) 306, 307, and 308 of those clients are known to the key generator 305. Knowing the user identifiers 306, 307, and 308 of the clients enables the arrangement of fig. 3 to find out at least one respective public key of each client. When a public key of a client is known, the arrangement knows that a corresponding paired private kay is held by the same client. The key generator 305 may then generate the keys for use in the encapsulating process so that each encapsulated version of the shared secret will be subject to decapsulation with the private key, the paired public key of which is known to the arrangement of fig. 3.

The keys for use in the encapsulation are shown with reference designators 309, 310, and 311 in fig. 3. For reasons described in more detail later, these keys are called ephemeral keys 309, 310, and 311. The first ephemeral key 309 is conceptually associated with the first user identifier 306, the second ephemeral key 310 is conceptually associated with the second user identifier 307, and so on.

Reference designator 312 shows the encapsulator functionality in the arrangement. As already indicated above, the encapsulator functionality 312 is configured to digitally encapsulate the shared secret 302 in a first version 313 and one or more further versions 314 and 315, each time with the respective one of the ephemeral keys 309, 310, and 311. As the shared secret may be called by the acronym SS, each i:th encapsulated version thereof may be designated ENC(SS) #i, where

$$i \in [1, \dots, N].$$

Each i:th encapsulated version 313, 314, and 315 is subject to decapsulation with a private key, a corresponding public key of which is known to the arrangement as being a public key of the respective i:th client.

As shown with reference designator 316, the arrangement is configured to store the first version 313 and the one or more further versions 314 and 315 in association with the common identifier or DATA-ID 304. It is possible but not mandatory that each stored version is also separately identifiable by the associated user identifier 306, 307, or 308. An association to a user identifier of an i:th client means that the i:th stored encapsulated version of the shared secret is known to be subject to decapsulation with a private key, the corresponding paired public key of which is known to be a public key of the i:th client.

Above in the description of figs. 1 and 2 it was explained how the trust provider transmits its response 104 or 203, respectively, to client A. As also explained already, whether this response contains the encapsulated version 313 that is subject decapsulation with a private key held by client A depends on whether the shared secret 302 was generated by the trust provider (as in fig. 1) or by client A themselves (as in fig. 2). The same applies to the common identifier or DATA-ID 304. If the operation proceeded as in fig. 1, also the DATA-ID 304 was only generated for the first time by the trust provider and needs to be transmitted to client A in the response 104. If, however, the operation proceeded as in fig. 2, client A could have generated also the DATA-ID and transmitted it to the trust provider already in the first request 202. Alternatively, if the algorithm used to generate the DATA-ID is known to both client A and the trust provider, they can generate the same DATA-ID 304 independently. In these latter cases, the trust provider does not need to transmit the DATA-ID to client A in the response 203.

When the arrangement then receives the so-called second request 106 from one of the further clients, it may note that the originator of the request is identifiable as a holder of one of the further private keys. Here, the further private keys are those that the arrangement knows to enable their holders to decapsulate a corresponding encapsulated version of the shared secret. Advantageously, the arrangement requires the originator of each such second request to authenticate themselves using a strong and reliable authentication mechanism before responding to the respective second request. Each such second request should also refer to the common identifier or DATA-ID 304. Hence, the arrangement knows to respond to the second request by transmitting that of further versions 314 or 315 that is subject to decapsulation with the private key, the paired public key of which is known to the arrangement as being a public key of the respective one of said further clients.

Above it was pointed out that it is possible but not mandatory that each stored version 313, 314, and 315 of the encapsulated shared secret is also separately identifiable by the associated user identifier 306, 307, or 308. If the stored versions are not identifiable by the associated user identifier, the trust provider cannot know, which of them it should transmit to the originator of the second request. It is possible, however, that the trust provider simply transmits every version in its response to the second request. It remains then the responsibility of the client receiving the bunch of versions to try decapsulating each of them in turn with their appropriate private key. The decapsulation will only succeed in the case of the correct version.

As a special case, the arrangement may receive a request like the one called the second request above also from client A. It may happen, for example, that client A has somehow lost their previously obtained copy of the shared secret and must ask the trust provider to transmit it anew. The arrangement should respond to such an exceptional second request similarly as it responds to the actual second requests, i.e. by transmitting the first encapsulated version 313 that is subject to decapsulation with the private key, the paired public key of which is known to the arrangement as being a public key of client A. What was said above about the trust provider possibly transmitting all versions of the encapsulated shared secret in response to a second request, applies also here.

An obfuscator functionality 317 is shown in fig. 3 as an advantageous further feature of the arrangement. The arrangement may be configured to permanently obfuscate the plaintext form of the shared secret 302, as well as the ephemeral keys 309, 310, and 311 after using them for the generation of the encapsulated versions 313, 314, and 315, respectively. In such a case, even if the arrangement has the encapsulated versions 313, 314, and 315 stored as indicated with reference designator 316, it cannot even itself later find out the plaintext form of the shared secret 302. This provides an additional layer of security in case the security measures of the trust provider's arrangement were later successfully penetrated by an unauthorized party who tried to gain access to the previously distributed shared secrets of clients. Yet, any of the clients among which the shared secret was originally distributed can download their dedicated encapsulated version of the shared secret also at any later moment, for decapsulating with their respective private key.

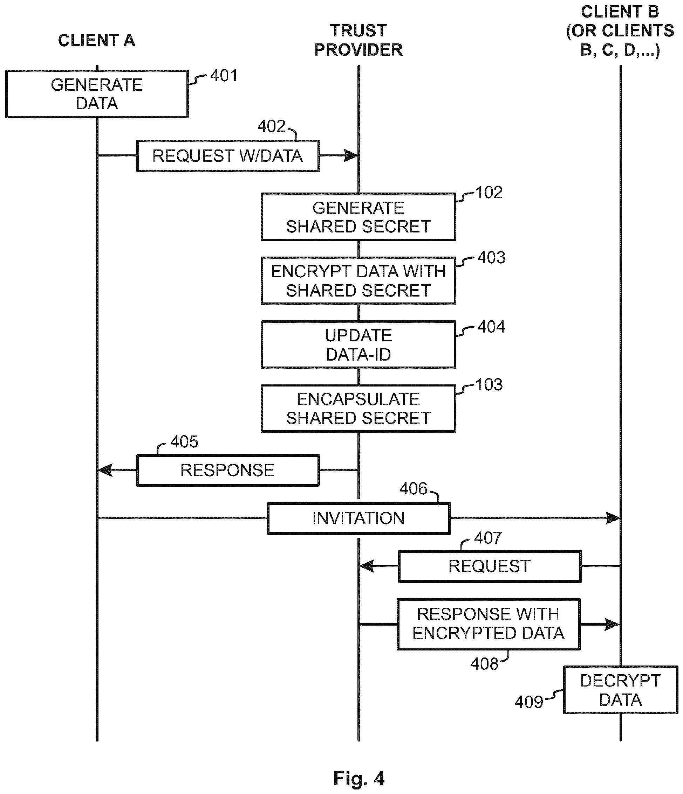

Fig. 4 shows another embodiment of the exchange of transmissions and execution of some operations in an arrangement for distributing a shared secret among clients. The parties shown are the same as in figs. 1 and 2, and the shared secret is generated by the trust provider like in fig. 1. As a difference to the embodiments of figs. 1 and 2, in fig. 4 the initiator of communications, i.e. client A, has already some data that they wish to be transmitted to client (s) B, (C, D,...) in a cryptographically protected way. When, how, or where such data actually originated is immaterial to the following description, but for the sake of example fig. 4 shows the generation of the data as step 401.

Similar to figs. 1 and 2, the arrangement of the trust provider receives a first request 402 from client A. The communications connection between client A and the trust provider is assumed to be cryptographically protected (irrespective of the actual method used) and the trust provider is assumed to have required client A to use a strong authentication method, so this initial transaction should involve a reasonable level of security against any unauthorized access to the data by third parties.

The generation of a shared secret by the trust provider at step 102 takes place in the same way as in fig. 1. At step 403, the trust provider uses the shared secret (or a further cryptoproduct derived therefrom) as an encryption key to encrypt the data it received from client A.

Client A may have also transmitted a common identifier called DATA-ID in the first request 402. Alternatively, the arrangement of the trust provider may have calculated a DATA-ID from the received data already before step 403. In any case, a common identifier DATA-ID may be either generated or updated at step 404. As a non-limiting example, the DATA-ID formed at step 404 may be a hash or other cryptoproduct derived from the shared secret that the arrangement generated at step 102.

Encapsulating the shared secret at step 103 takes place in the same way as in figs. 1 and 2 (for details, see fig. 3 and its associated description). As a difference to figs. 1 to 3, the arrangement of the trust provider is configured to store also the encrypted data (and not only the encapsulated versions of the shared secret) in association with the common identifier DATA-ID. Thus, after the completion of steps 102 - 103 in fig. 4, the common identifier DATA-ID may be considered as a kind of pointer in the arrangement of the trust provider, pointing to a dedicated data storage where the encrypted data and the encapsulated versions of the shared secret are waiting to be distributed to the clients that are to communicate with each other.

The response 405 from the trust provider to client A contains at least an acknowledgement that the trust provider has completed steps 102 - 103, as well as the (updated) common identifier DATA-ID. It may also contain the first version of the encapsulated shared secret (i.e. the one subject to decapsulation with a private key of client A) and/or the encrypted data that the arrangement of the trust provider generated at step 403. Transmitting the encrypted data back to client A at this point is not necessary, as client A possesses the data already as a result of having generated it themselves at step 401. Also, transmitting the encapsulated shared secret to client A is only necessary if client A needs the shared secret for some further use, like for such communications between client(s) B, (C, D,...) that are not shown in fig. 4.

Client A transmits an invitation 406 to client (s) B, (C, D,...) . The invitation 406 contains at least the common identifier DATA-ID in the (updated) form in which client A received it from the trust provider in the first response 405. Equipped with knowledge of the common identifier DATA-ID, any of clients B, C, D,... who received the invitation 406 may then approach the trust provider with the so-called second request 407, referring to the common identifier DATA-ID. The arrangement of the trust provider is configured to respond to receiving the second request(s) 407 by transmitting the encrypted data (and the appropriate encapsulated version of the shared secret, like in figs. 1 and 2) in the response 408 to the client B, C, and/or D who sent the second request(s) 407. After successful decapsulation of the shared secret, the client who received the response 408 is able to decrypt the transmitted data at step 409.

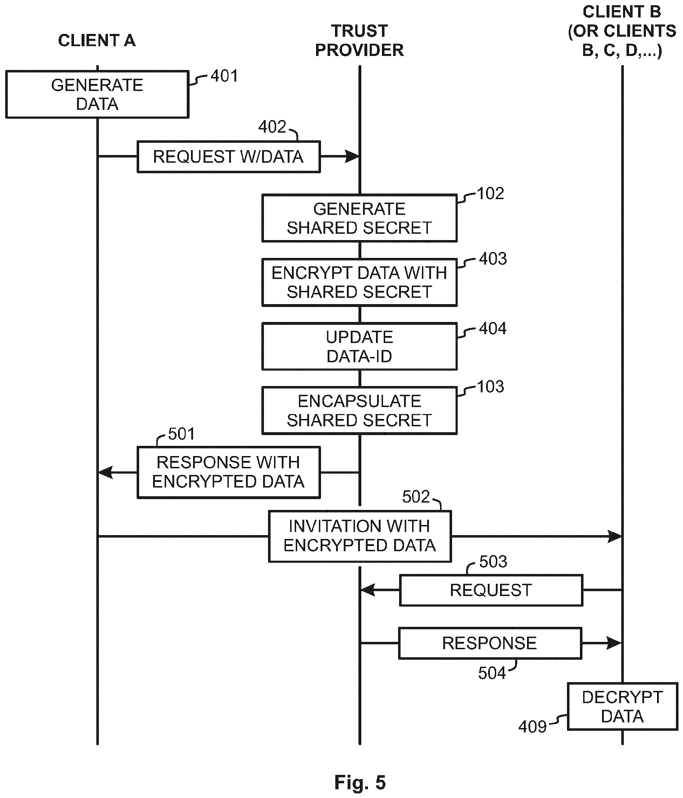

Fig. 5 shows another embodiment of the exchange of transmissions and execution of some operations in an arrangement for distributing a shared secret among clients. Steps and actions with reference designators 401, 402, 102, 403, 404, and 103 are the same as in fig. 4. As a difference to fig. 4, the response 501 to client A now mandatorily contains also the encrypted data that the arrangement of the trust provider generated at step 403. When client A then transmits an invitation 502 to client (s) B, (C, D,...) it includes the encrypted data in the invitation. Consequently, the client(s) who received the invitation 502 need not download the encrypted data from the trust provider as in fig. 4. It suffices to transmit the so-called second request 503 to the trust provider to receive, in the response 504, the required version(s) of the encapsulated shared secret. After decapsulating the appropriate version, the client in question may decrypt, at step 409, the encrypted data it received in the invitation 502.

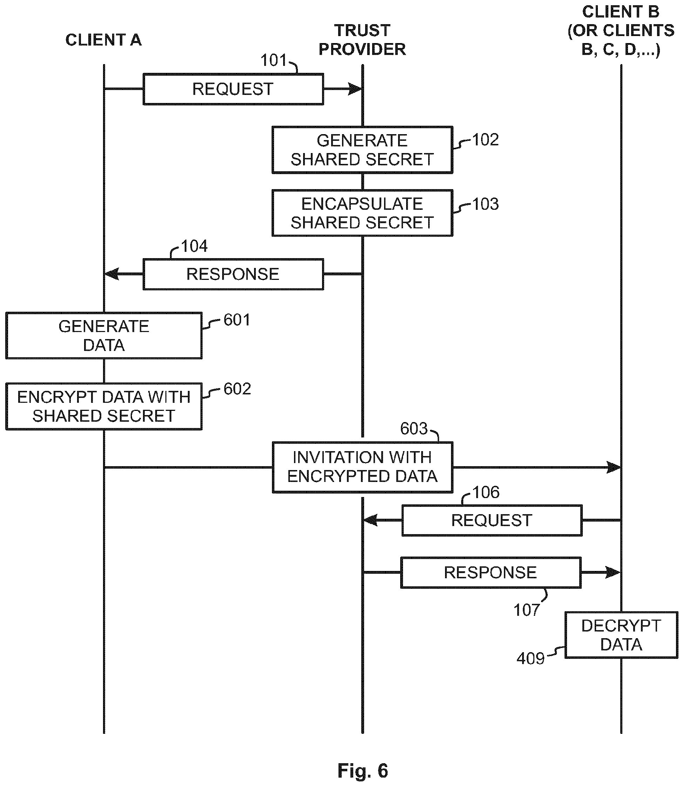

Fig. 6 shows another embodiment of the exchange of transmissions and execution of some operations in an arrangement for distributing a shared secret among clients. Steps and actions with reference designators 101, 102, 103, and 104 are the same as in fig. 1. Similar to figs. 4 and 5, also in fig. 6 it is assumed that client A wishes to securely transmit some data to client(s) B, (C, D,...). When, how, or where such data actually originated is again immaterial to the following description, but for the sake of example fig. 6 shows the generation of the data as step 601. At step 602, client A encrypts the data using the shared secret it received (as the appropriate encapsulated version) from the trust provider in the first response 104. Client A includes the encrypted data in the invitation 603 it transmits to client (s) B, (C, D,...). The actions of the recipient (s) of the invitation 603 in steps 106, 107, and 409 are the same as in figs. 1 and 4, respectively.

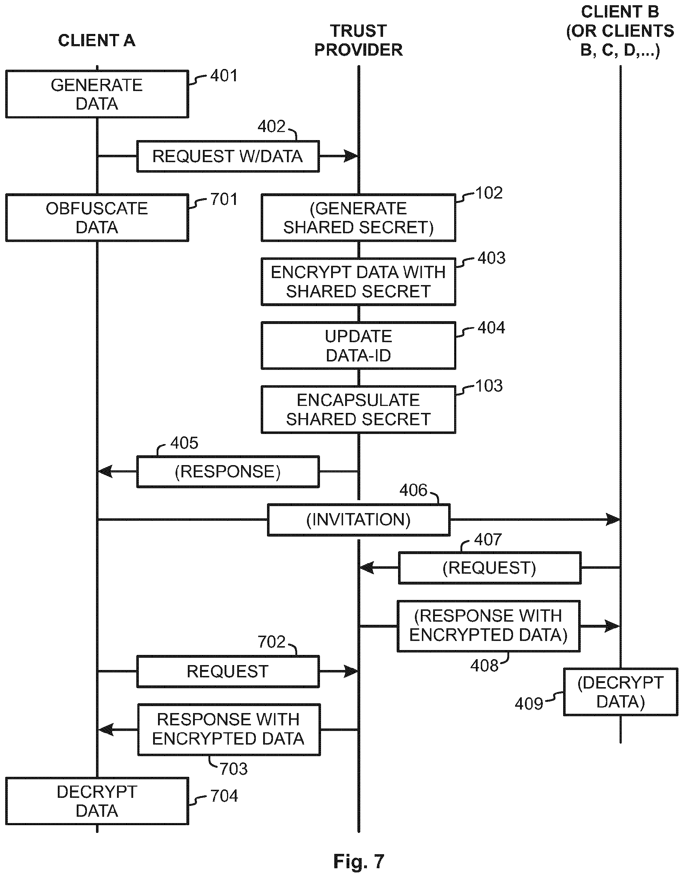

Fig. 7 shows another embodiment of the exchange of transmissions and execution of some operations in an arrangement for distributing a shared secret among clients. Steps and actions with reference designators 401, 402, 102, 403, 404, and 103 may be the same as in fig. 4, however with some possible differences. For example, the request 402 does not necessarily contain any identifiers of any other clients. Namely, one possible application of the invention is for individual clients to use the trust provider as a secure storage of data that they might need later but that they do not want to store in their own possession in the meantime, for example because they have no sufficiently secure form of data storage available in their own device (s) . A non-limiting example of such data is an encryption key to be used in symmetric cryptography when communicating later with other clients, or a seed to be used in later re-generating such a key.

In conformity with that above, the data generated by client A at step 401 may already contain (also) the shared secret, like at step 201 of fig. 2 earlier. In such a case, step 102 is not needed and the encryption of the data - if there is also other data than the shared secret itself - at step 403 takes place using the shared secret that the trust provider received from client A at step 402.

As illustrated with the use of parentheses, steps 405, 406, 407, and 408, and 409 are optional in fig. 7. They may be included if the purpose is to eventually establish a situation where client A as well as at least one of clients B, C, D,... possess the same shared secret. The steps are not needed, however, if the purpose is only to ensure that client A can later retrieve data that they generated at step 401 and transmitted to the trust provider at step 402 but obfuscated (or simply lost) thereafter at step 701. Basically, the trust provider does not even need to respond to client A at step 405 if, at that stage, client A does not need any confirmation that the trust provider completed the required ones of steps 102, 403, 404, and 103 as intended. However, if the trust provider updated the so-called common identifier at step 404 (instead of using an identifier that would have come from client A at step 402), it may transmit the updated common identifier to client A in the response transmitted at step 405.

Notable is that if the trust provider is to act only as a secure data storage for client A, without any need to ever respond to any of clients B, C, D,... in association with this particular stored data, the encapsulation at step 103 only needs to take place using one ephemeral key. Comparing to fig. 3 earlier, there would be only the first user identifier 306, only the first ephemeral key 309, and only the first version 313 of the encapsulated shared secret.

Later, at step 702, client A may send to the trust provider a second request that may be quite like those "second" requests that other clients may transmit and that are shown with reference designator 407 in fig. 7. The trust provider will then note that the request of step 702 comes from the first client A, identifiable as a holder of the key that was called the first private key earlier in this text. The trust provider will also note that the request refers to the so-called common identifier mentioned above. The trust provider will then respond by transmitting, at step 703, (both the encrypted data and) that version of the encapsulated version of the shared secret that is subject to decapsulation with the private key, the paired public key of which it knows to be a public key of the first client A. At step 704, client A decapsulates the encapsulated shared secret using their private key. If there was also other data that came encrypted in the response 703, client A decrypts the received encrypted data at step 704.

The methods and arrangements described above can advantageously be applied when one wishes to use communications and/or information distribution channels that already exist between users to also exchange confidential information. Such already existing channels include, but are not limited to, emails, instant messaging, VoIP (Voice over IP) communications, and packet data networks. The possibility of using previously existing channels is a significant advantage, as it mitigates any need to establish new infrastructure and brings secure digital communications within reach of a vast number of existing devices with only minimal needs to update existing software. Securely distributing shared secrets according to the foregoing description allows the communicating parties to maintain high levels of security against even the most advanced attacking attempts while requiring only moderate amounts of processing capacity. This makes the methods and arrangements described above readily applicable to, for example, IoT (Internet of Things) solutions where the nature and physical implementation of at least some of the devices involved may set strict limitations on critical resources such as power consumption, computing capacity, and/or available memory.

In all embodiments above, concerning all information transmitted by the trust provider, the trust provider may digitally sign the transmitted information before transmitting. This applies in particular to the encapsulated versions of the shared secret: the trust provider may digitally sign each encapsulated version of the shared secret before transmitting. The use of a digital signature provides an additional aspect of security because the recipient of a digitally signed information can check the signature against a known public key of the assumed originator of the information to ensure authenticity and integrity of the information.

## Claims

1. An arrangement for distributing a shared secret (302) among clients, the arrangement being configured to:

   - in response to receiving a first request (101, 202, 402) from a first client, generate (305) a first ephemeral key (309) and one or more further ephemeral keys (310, 311),
   - digitally encapsulate (103) the shared secret (302) in a first version (313) and one or more further versions (314, 315), using a key encapsulation mechanism (312) so that

     -- said first version (313) is the shared secret (302) encapsulated with the first ephemeral key (309) and subject to decapsulation with a first private key, a paired public key of which is known to the arrangement as being a public key of the first client, and
     -- each said further version (314, 315) is the shared secret (302) encapsulated with a respective one of said one or more further ephemeral keys (310, 311) and subject to decapsulation with a respective further private key, a paired public key of which is known to the arrangement as being a public key of a respective further client,

   - store (316) said first (313) and said one or more further versions (314, 315) in association with a common identifier (304), and
   - respond to receiving a second request (106, 407, 503, 702) from one of said first or further clients identifiable as a holder of one of said first or further private keys, said second request (106, 407, 503) referring said common identifier (304), by transmitting (107, 408, 504, 703) that of said first (313) or further versions (314, 315) that is subject to decapsulation with the private key, the paired public key of which is known to the arrangement as being a public key of said one of said first or further clients.

2. An arrangement according to claim 1, configured to generate (305) said one or more further ephemeral keys (310, 311) in association with respective client identifiers revealed by said first request (101, 202, 402).

3. An arrangement according to any of claims 1 or 2, comprising a hardened true random number generator subsystem (301) configured to generate said shared secret (302).

4. An arrangement according to claim 3, configured to transmit said first version (313) to said first client in a response transmission (104, 405, 501) responding to said first request (101, 402).

5. An arrangement according to any of claims 1 or 2, configured to use a value received in said first request (202) as said shared secret.

**6.** An arrangement according to any of the preceding claims, configured to generate said common identifier (304) as a cryptoproduct derived from said shared secret (302).

**7.** An arrangement according to any of the preceding claims, configured to:

- use said shared secret or a cryptoproduct derived therefrom as an encryption key to encrypt (403) digital data received from the first client,
- store the encrypted digital data in association with said common identifier (304), and
- respond to receiving said second request (407, 702) from said one of said further clients by transmitting the encrypted digital data to said one of said further clients.

**8.** A method for distributing a shared secret (302) among clients, the method comprising:

- in response to receiving a first request (101, 202, 402) from a first client, generating (305) a first ephemeral key (309) and one or more further ephemeral keys (310, 311),
- digitally encapsulating (103) the shared secret (302) in a first version (313) and one or more further versions (314, 315), using a key encapsulation mechanism (312) so that

-- said first version (313) is the shared secret (302) encapsulated with the first ephemeral key (309) and subject to decapsulation with a first private key, a paired public key of which is known to the arrangement as being a public key of the first client, and
-- each said further version (314, 315) is the shared secret (302) encapsulated with a respective one of said one or more further ephemeral keys (310, 311) and subject to decapsulation with a respective further private key, a paired public key of which is known to the arrangement as being a public key of a respective further client,

- storing (316) said first (313) and said one or more further versions (314, 315) in association with a common identifier (304), and
- responding to receiving a second request (106, 407, 503, 702) from one of said first or further clients identifiable as a holder of one of said first or further private keys, said second request (106, 407, 503) referring said common identifier (304), by transmitting (107, 408, 504, 703) that of said first (313) or further versions (314, 315) that is subject to decapsulation with the private key, the paired public key of which is known to the arrangement as being a public key of said one of said first or further clients.

**9.** A method according to claim 8, wherein the generating (305) of said one or more further ephemeral keys (310, 311) takes place in association with respective client identifiers revealed by said first request (101, 202, 402).

**10.** A method according to any of claims 8 or 9, comprising generating said shared secret (302) in a hardened true random number generator subsystem (301).

**11.** A method according to claim 10, wherein said first version (313) is transmitted to said first client in a response transmission (104, 405, 501) responding to said first request (101, 402).

**12.** A method according to any of claims 8 or 9, wherein a value received in said first request (202) is used as said shared secret.

**13.** A method according to any of claims 8 to 12, comprising generating said common identifier (304) as a cryptoproduct derived from said shared secret (302) .

**14.** A method according to any of claims 8 to 13, comprising:

- using said shared secret or a cryptoproduct derived therefrom as an encryption key to encrypt (403) digital data received from the first client,
- storing the encrypted digital data in association with said common identifier (304), and
- responding to receiving said second request (407, 702) from said one of said further clients by transmitting the encrypted digital data to said one of said further clients.

**15.** A computer program product comprising one or more sets of one or more machine-executable instructions that are configured to, when executed by one or more processors, cause the execution of a method according to any of claims 8 to 14.

Fig. 1

Fig. 2

**Fig. 3**

**CLIENT A**

**TRUST PROVIDER**

**CLIENT B (OR CLIENTS B, C, D,...)**

GENERATE DATA — 401

402 — REQUEST W/DATA

GENERATE SHARED SECRET — 102

ENCRYPT DATA WITH SHARED SECRET — 403

UPDATE DATA-ID — 404

ENCAPSULATE SHARED SECRET — 103

405 — RESPONSE

406 — INVITATION

407 — REQUEST

RESPONSE WITH ENCRYPTED DATA
408

DECRYPT DATA
409

**Fig. 4**

Fig. 5

**Fig. 6**

**Fig. 7**

EP 4 757 236 A1

# EUROPEAN SEARCH REPORT

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 132 846 B2 (SYMMERA INC [US]) 29 October 2024 (2024-10-29) | 1-6, 8-13,15 | INV. H04L9/08 |
| Y | * columns 26-28 * <br> * columns 40,41; figures 3D-3F * <br> * columns 49-51; figures 5B-5E * <br> ----- | 7,14 | |
| X | US 2023/020193 A1 (WILLIAMS DAVID [GB] ET AL) 19 January 2023 (2023-01-19) | 1-6, 8-13,15 | |
| Y | * paragraphs [0497] - [0507]; figure 5i * <br> ----- | 7,14 | |
| A | XIAOPENG YANG ET AL: "Efficient chosen ciphertext secure key encapsulation mechanism in standard model over ideal lattices", INTERNATIONAL JOURNAL OF COMPUTER MATHEMATICS., vol. 94, no. 5, 4 May 2017 (2017-05-04), pages 866-883, XP055531120, GB ISSN: 0020-7160, DOI: 10.1080/00207160.2016.1149578 * abstract * <br> ----- | 1-15 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| Munich | 30 April 2025 | Billet, Olivier |

EPO FORM 1503 03.82 (P4C01)

**EP 4 757 236 A1**

## ANNEX TO THE EUROPEAN SEARCH REPORT
## ON EUROPEAN PATENT APPLICATION NO.

EP 24 21 7184

30-04-2025

| Patent document cited in search report | | Publication date | Patent family member(s) | | Publication date |
|---|---|---|---|---|---|
| US 12132846 | B2 | 29-10-2024 | NONE | | |
| US 2023020193 | A1 | 19-01-2023 | AU | 2020380554 A1 | 02-06-2022 |
| | | | CA | 3157139 A1 | 14-05-2021 |
| | | | EP | 4055772 A1 | 14-09-2022 |
| | | | GB | 2589312 A | 02-06-2021 |
| | | | JP | 7602539 B2 | 18-12-2024 |
| | | | JP | 2023502346 A | 24-01-2023 |
| | | | US | 2023020193 A1 | 19-01-2023 |
| | | | WO | 2021090027 A1 | 14-05-2021 |

EPO FORM P0459